# EUROPÄISCHE PATENTANMELDUNG

(11) **EP 4 223 585 A1**
(43) Veröffentlichungstag der Anmeldung: **09.08.2023**
(21) Anmeldenummer: 23000015.0
(22) Anmeldetag: 01.02.2023
(51) Int. Cl.: B60N 2/56

(54) **VERFAHREN ZUM HERSTELLEN EINES PLENUMEINSATZES FÜR EINEN SITZ UND NACH DERM VERFAHREN HERGESTELLTER PLENUMEINSATZ**

(30) Priorität: 03.02.2022 US 202263306227 P; 15.03.2022 US 202217694744
(71) Anmelder: I.G. Bauerhin GmbH, 63584 Gründau (DE)
(72) Erfinder: BAJIC, Goran, Belle River, NOR1A0 Ontario (CA)
(74) Vertreter: Grimm, Ekkehard

(57) **Zusammenfassung**

Verfahren zur Herstellung eines Plenumeinsatzes für einen Fahrzeugsitz, umfassend die Schritte des Bereitstellens einer äußeren Materialschicht mit einer Kante, des Bereitstellens einer inneren Abstandshalterschicht, des Anbringens des Materials der inneren Abstandshalterschicht auf der äußeren Materialschicht, des Faltens der äußeren Materialschicht über die innere Abstandshalterschicht, so dass sich die Kante überlappt, und des Versiegelns der überlappenden Kante der äußeren Materialschicht, um die Abstandshalterschicht aufzunehmen.

## Beschreibung

Die vorliegende Erfindung ist auf den Bereich der Komfortsysteme für Insassenstützen gerichtet und betrifft ein Verfahren zum Herstellen eines Plenumeinsatzes für einen Sitz und einen Plenumeinsatz, insbesondere einen solchen, der nach dem Verfahren hergestellt ist, insbesondere Plenumeinsätze für Komfortsysteme in Fahrzeug- und Nicht-Fahrzeug-Anwendungen,

Es ist aus dem Stand der Technik der Sitzkomfortsysteme bekannt, dass ein Plenumeinsatz aus mindestens drei Schichten besteht und mit mindestens drei Stanzvorgängen hergestellt wird. Dabei wird die oberste Schicht des Plenumeinsatzes gestanzt, die mittlere Abstandsschicht wird gestanzt und die unterste Schicht wird gestanzt, anschließend werden diese drei Schichten gestapelt und an allen Kanten durch HF (Hochfrequenz), Heißlaminierung oder ähnliches versiegelt.

Es ist die Aufgabe der vorliegenden Erfindung, ein Verfahren zum Herstellen eines Plenumeinsatzes für einen Sitz, einen nach dem Verfahren hergestellten Plenumeinsatz sowie einen Plenumeinsatz anzugeben, der einfach in seinem Aufbau ist, einfacher und mit wenigeren Schritten als mit bekannten konventionellen Verfahren herstellbar ist.

Gelöst wird die Aufgabe durch ein Verfahren zum Herstellen eines Plenumeinsatzes nach Anspruch 1 und durch einen nach dem Verfahren hergestellten Plenumeinsatz nach Anspruch 15. Bevorzugte Weiterbildungen ergeben sich aus den abhängigen Ansprüchen.

Die vorliegende Erfindung stellt ein Verfahren zur Herstellung eines Plenumeinsatzes für einen Sitz bereit, das einfacher ist und weniger Schritte umfasst als bekannte, konventionelle Herstellungsverfahren für Plenumeinsätze, ebenso einen Plenumeinsatz als solchen.

Unter einem Plenumeinsatz ist eine Verteilerkammer bzw. eine Luftverteilungskammer zu verstehen.

Das Verfahren umfasst die Verwendung von zwei Lagen, und zwar von einer äußeren Materialschicht und einem inneren Abstandsmaterial, auch als Abstandsmateralschicht oder Abstandshalterschicht bezeichnet, gefolgt von der äußeren Lage, die über das innere Abstandsmaterial gefaltet und nur entlang der offenen, überlappenden Kanten versiegelt wird, während eine Kante der äußeren Lage umgefaltet wird und somit ein integraler Bestandteil des Plenums ist. Das Verfahren kann zwei Schneidevorgänge umfassen, bei denen die innere Abstandshalterschicht zugeschnitten wird, gefolgt durch ein Falten der äußeren Schicht über die zugeschnittene Abstandshalterschicht, durch ein Versiegeln der offenen, überlappenden Kanten der äußeren Schicht und schließlich durch ein Zuschneiden der äußeren Schicht. Alternativ kann das Verfahren auch nur einen einzigen Schneidevorgang umfassen, bei dem die äußere Lage über die innere Lage aus dem Abstandsmaterial gefaltet wird, gefolgt durch ein Versiegeln der überlappenden Teile der äußeren Lage und ein einziges Zuschneiden aller Lagen der umgefalteten Anordnung entlang der versiegelten Teile. In einer weiteren Alternative kann das Verfahren das Zuschneiden der äußeren Schicht in eine gewünschte Form, das Zuschneiden der Abstandshalterschicht in eine gewünschte Form, das Falten der äußeren Schicht über die Abstandshalterschicht und das anschließende Versiegeln der überlappenden Abschnitte der äußeren Schicht umfassen, ohne dass nach dem Versiegeln ein letzter Zuschnitt, d.h. ein Endkonturzuschnitt bzw. eine Endkonturstanzung, erfolgt.

Die äußere Materialschicht kann aus einer undurchlässigen Folie und einer Filzschicht aber auch durch eine Vliesschicht gebildet werden.

Die äußere Materialschicht kann eine Polyurethanfolie umfassen.

Auch kann die äußere Materialschicht eine Polyvinylchloridfolie umfassen.

Die Abstandshalterschicht kann ein (luft-)durchlässiges Gewebe oder ein (luft-)durchlässiges Abstandsgewirke oder ein 3-D gedrucktes (luft-)durchlässiges Abstandsgeflecht umfassen.

Die äußere Materialschicht kann durch Verbinden mehrerer Materialschichten gebildet werden.

Die miteinander verbundenen Mehrfachschichten können Filz und/oder Vlies und einen Polyurethanfilmklebstoff umfassen.

Die miteinander verbundenen Mehrfachschichten können weiterhin ein druckempfindliches Klebeband oder ein doppelseitiges Klebeband enthalten.

Es ist ein Schritt des Schneidens der inneren Abstandshalterschicht in eine Sitzkonfiguration vor den Schritten des Umfaltens und des Versiegelns und schließlich des Schneidens der äußeren Materialschicht vorgesehen.

Weiterhin kann ein Schritt des Schneidens des umgefalteten, versiegelten Einsatzes entlang des versiegelten Randabschnitts vorgesehen werden.

Die Schritte des Schneidens der äußeren Materialschicht in eine gewünschte Form, des Schneidens der Abstandshalterschicht in eine gewünschte Form, des Faltens der geschnittenen äußeren Schicht über die geschnittene Abstandshalterschicht und des Versiegelns überlappender Randabschnitte der äußeren Materialschicht können ohne einen weiteren letzten Schnitt nach dem Versiegeln durchgeführt werden.

Das Falten der äußeren Materialschicht über die Abstandshalterschicht kann durch Falten der äußeren Materialschicht in der Hälfte erreicht werden.

Das Falten der äußeren Materialschicht über die Abstandshalterschicht kann durch Falten des äußeren Materials entlang einer von der Mitte der äußeren Materialschicht versetzten Linie erfolgen.

Die Oberfläche der äußeren Materialschicht wird vorzugsweise mindestens doppelt so groß wie die Oberfläche der Abstandshalterschicht gewählt.

Die Kantenversiegelung kann durch HF (Hochfrequenz), Heißlaminierung, durch ein Klebeband, bevorzugt ein doppelseitig klebendes Klebeband, erfolgen.

Eine Befestigungskomponente ist für die Aufnahme einer Luftbewegungsvorrichtung an einer Außenfläche der Außenschicht vorgesehen.

Auch kann ein Anbringen einer Luftbewegungsbefestigungskomponente an einer Innenfläche der Außenschicht vorgesehen werden.

Diese und andere Merkmale und Vorteile der Erfindung ergeben sich aus der nachfolgenden Beschreibung von Ausführungsbeispielen anhand der Zeichnung.

In der Zeichnung:
FIG. 1 zeigt eine Draufsicht auf einen Plenumeinsatz, um diesen und daran einen ersten Schritt zu dessen Herstellung gemäß einer Ausführungsform der Erfindung darzustellen, bei dem eine äußere Schicht des Plenumeinsatzes vorgesehen ist,
FIG. 2 zeigt eine Draufsicht auf den Plenumeinsatz, um diesen und daran einen zweiten Schritt zu dessen Herstellung darzustellen, bei dem Teile der äußeren Schicht, wie dargestellt, aus- bzw. zugeschnitten sind,
FIG. 3 zeigt eine Draufsicht auf den Plenumeinsatz, um diesen und daran einen dritten Schritt zu dessen Herstellung darzustellen, bei dem ein inneres Abstandsmaterial auf einer Oberfläche der äußeren Schicht angeordnet ist,
FIG. 4 zeigt eine Seitenansicht des Plenumeinsatzes, um diesen und daran einen vierten Schritt zu dessen Herstellung darzustellen, bei dem die äußere Schicht in der Hälfte gefaltet ist, um das innere Abstandsmaterial zu umschließen,
FIG. 5 zeigt eine Draufsicht auf die gefaltete, äußere Schicht, die das innere Abstandsmaterial umhüllt,
FIG. 6 zeigt eine Draufsicht auf den Plenumeinsatz, um diesen und daran einen fünften Schritt zu dessen Herstellung darzustellen, bei dem der Plenumeinsatz entlang der offenen Kanten der überlappenden, umgefalteten äußeren Schicht versiegelt wird, um das Abstandsmaterial innerhalb des Plenumeinsatzes einzuschließen, und zeigt eine angebrachte Komponente für eine Luftbewegungsvorrichtung, die an der äußeren Oberfläche der äußeren Schicht angebracht ist,
FIG. 7 zeigt eine Draufsicht auf den Plenumeinsatz, um diesen und daran einen fünften Schritt zu dessen Herstellung darzustellen, bei dem der Plenumeinsatz entlang der offenen Kanten der überlappenden, umgefalteten Außenschicht versiegelt wird, um das Abstandsmaterial innerhalb des Plenumeinsatzes einzuschließen, und zeigt ein an der Innenfläche der Außenschicht befestigtes Bauteil für eine Luftbewegungsvorrichtung,
FIG. 8 zeigt in einer Draufsicht die gegenüberliegende Seite des Plenumeinsatzes der FIG. 6 und 7,
FIG. 9 zeigt in einer perspektivischen Ansicht eine Seite des hergestellten Plenumeinsatzes,
FIG. 10 zeigt in einer perspektivischen Ansicht die andere Seite des Plenumeinsatzes von FIG. 9, und
FIG. 11 zeigt eine perspektivische Explosionsansicht einer Ausführungsform des Plenums, die die Außenschicht mit einer Kombination aus PU- und Filzschichten undloder Vliesschichten und einem Klebstoff darstellt.

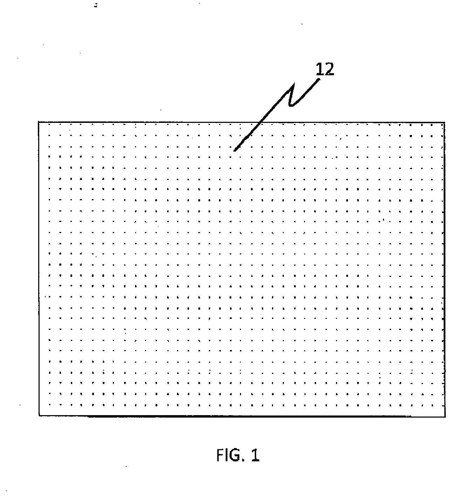

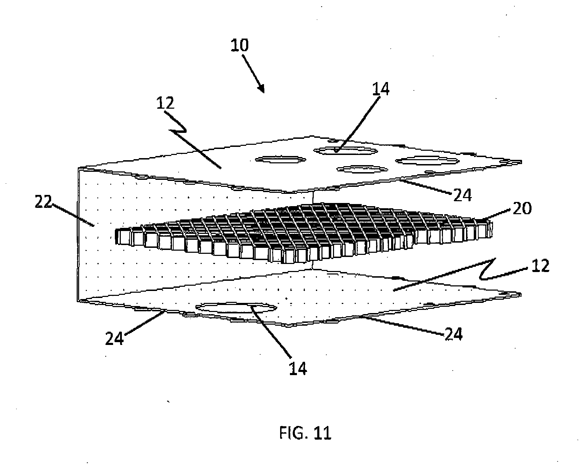

In den Figuren ist mit dem Bezugszeichen 10 ein Plenumeinsatz für einen Fahrzeugsitz bezeichnet. Wie in FIG. 1 dargestellt ist, wird bei einem Verfahren zur Herstellung eines solchen Plenumeinsatzes 10 in einem ersten Schritt eine einzelne, äußere, nicht atmungsaktive Trägerschicht (Außenschicht) 12 aus einem Folienmaterial, wie zum Beispiel einer Polyurethan-(PU)-Folie, einer Polyvinylchlorid-(PVC)-Folie oder aus einem anderen, ähnlichen, im Allgemeinen nicht atmungsaktiven (nicht durchlässigen) Material hergestellt. Alternativ kann, wie in FIG. 11 dargestellt ist, die einzelne äußere Schicht durch Verbinden mehrerer Materialschichten, zum Beispiel eine Kombination aus Filz und/oder Vlies und PU-Folienkleber, gebildet werden, und optional können weitere zusätzliche Schichten, zum Beispiel aus druckempfindlichem PSA (pressure sensitive adhesive) Klebeband, vorgesehen werden. Die äußere Schicht kann als Rollenmaterial oder als Blatt- oder Plattenmaterial bereitgestellt werden.

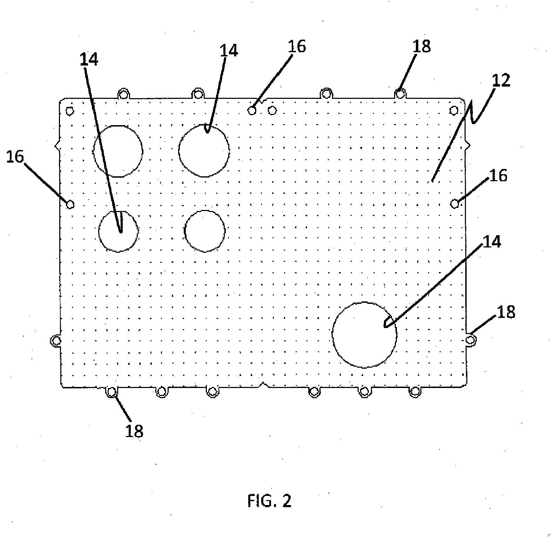

Wie in FIG. 2 dargestellt ist, wird in einem zweiten Schritt die äußere Schicht durch Stanzen, Laserschneiden oder ein anderes geeignetes Schneidverfahren zugeschnitten, um die endgültige Form der äußeren Schicht mit erforderlichen Öffnungen 14 für den Luftdurchlass, Vorrichtungen für die Produktion, wie Befestigungspunkte 16, Ohren 18 und dergleichen, zu versehen.

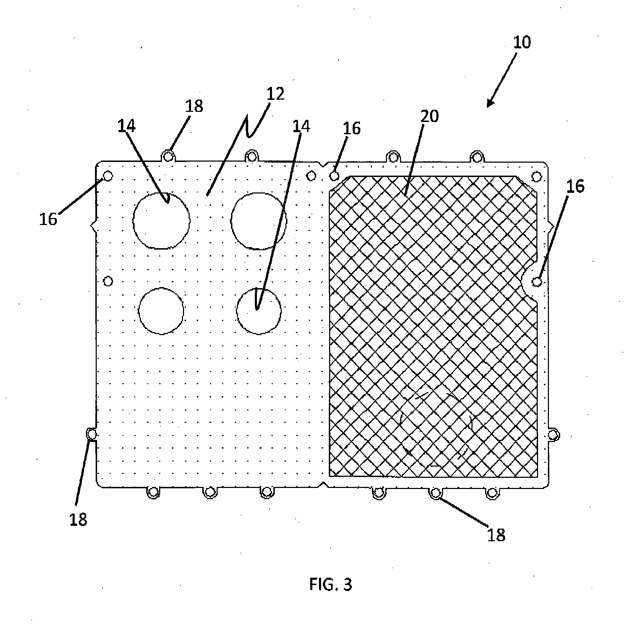

Ein dritter Schritt besteht, wie in FIG. 3 dargestellt ist, darin, eine Abstandsschicht 20 auf der Außenschicht 12 zu positionieren. Die Abstandsschicht 20 kann durch Stanzen, Laserschneiden oder ähnliches vorgeschnitten werden. Alternativ kann die Abstandsschicht 20 in einem späteren Schritt mit der Außenschicht 12 zugeschnitten werden. Die Abstandsschicht 20 kann auch optional mit einem HF (Hochfrequenz) Werkzeug, einem Heißlaminator oder ähnlichem auf die Außenschicht 12 aufgebracht werden. Die Abstandsschicht 20 kann aus einem luftdurchlässigen Gewebe, einem Abstandsgewirke oder einem anderen luftdurchlässigen Material bestehen, oder kann jede andere allgemein planare, reversibel verformbare, luftdurchlässige Struktur sein, wie beispielsweise ein mittels 3-D Druck hergestelltes (luft-)durchlässiges Abstandsgeflecht bzw. Abstandsgebilde.

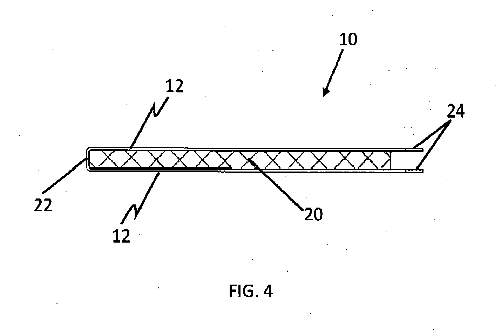

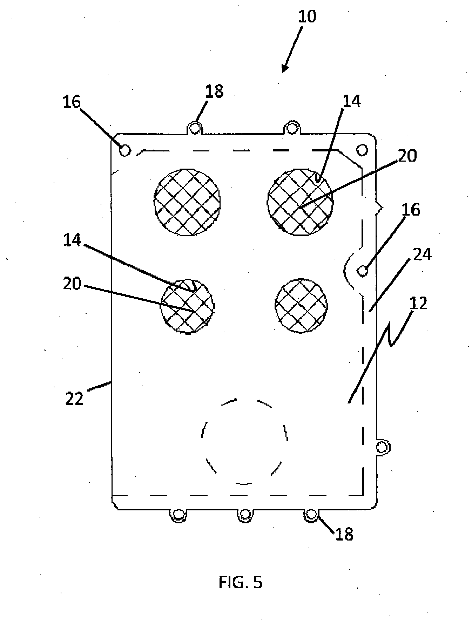

Wie in den FIG. 4 und 5 gezeigt ist, wird in einem vierten Schritt die äußere Schicht bzw. Lage 12 (Trägerschicht, Außenschicht) über die Abstandsschicht 20 gefaltet, beispielsweise durch Falten der äußeren Schicht 12 in ihrer Hälfte entlang einer umgefalteten Kante 22. Alternativ kann die äußere Lage 12 auch nicht entlang einer Mittellinie in der Hälfte gefaltet werden, sondern stattdessen entlang einer Linie, die von der Mitte versetzt ist, so dass der umgefaltete Teil größer oder kleiner als die Hälfte der äußeren Lage sein kann. Zum Beispiel kann der umgefaltete Teil 1/5 der Gesamtgröße der äußeren Schicht, 314 der Gesamtgröße, oder ähnlich, sein. In jedem Fall ist die Gesamtoberfläche der äußeren Schicht 12 mindestens doppelt so groß wie die Gesamtoberfläche der Abstandshalterschicht 20.

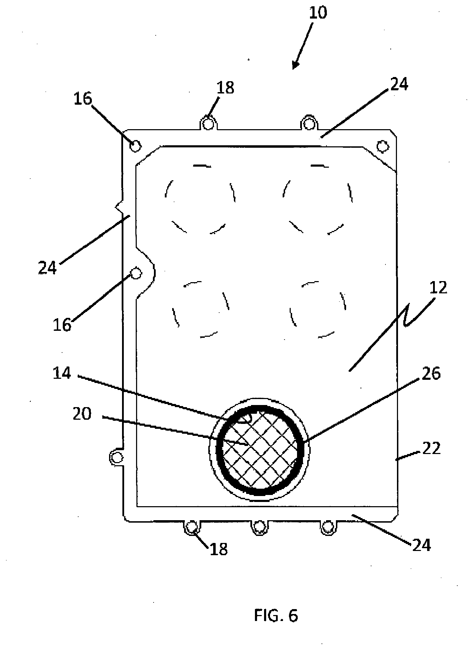

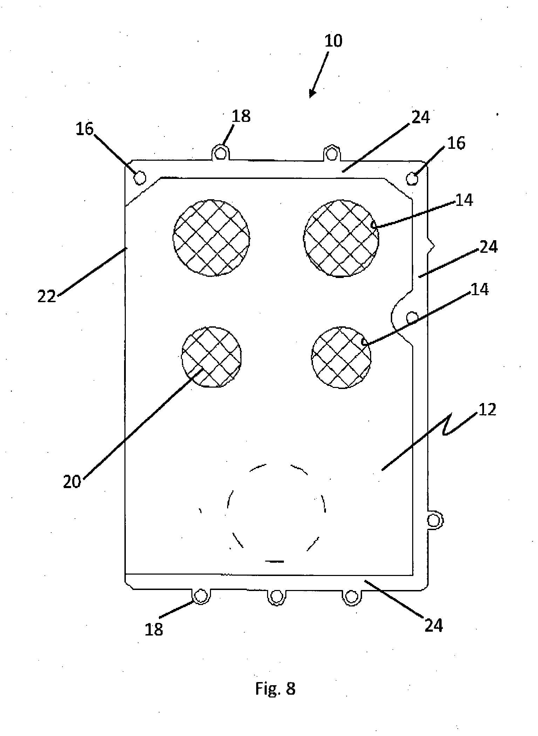

Wie in den FIG. 6, 7 und 8 gezeigt ist, besteht ein fünfter Schritt zur Herstellung darin, die offenen, überlappenden Teile 24 der gefalteten Außenschicht 12 zu versiegeln (zum Beispiel durch HF, Heißlaminierung, oder dergleichen), wobei entlang der umgefalteten Kante 22 der Außenschicht keine Versiegelung vorgenommen wird (da diese Kante bereits integral versiegelt ist), um die Abstandsschicht 20 innerhalb der gefalteten Außenschicht zu versiegeln.

Obwohl der Plenumeinsatz 10 im Beispiel vier Seiten besitzt, von denen drei Seiten versiegelt sind (und die vierte Seite die umgefaltete Seite ist), kann der Plenumeinsatz alternativ eine polygonale Form mit mehr als vier Seiten haben. In diesem Fall kann die äußere Schicht 12 entlang von mehr als drei offenen Kanten versiegelt sein, und die umgeschlagenen Kanten können mehr als eine Kante des Einsatzes bilden. Beispielsweise kann der Plenumeinsatz 10 entlang von vierzehn Kanten versiegelt sein, und der Einsatz kann zwei Kanten haben, die die umgefalteten Kanten sind.

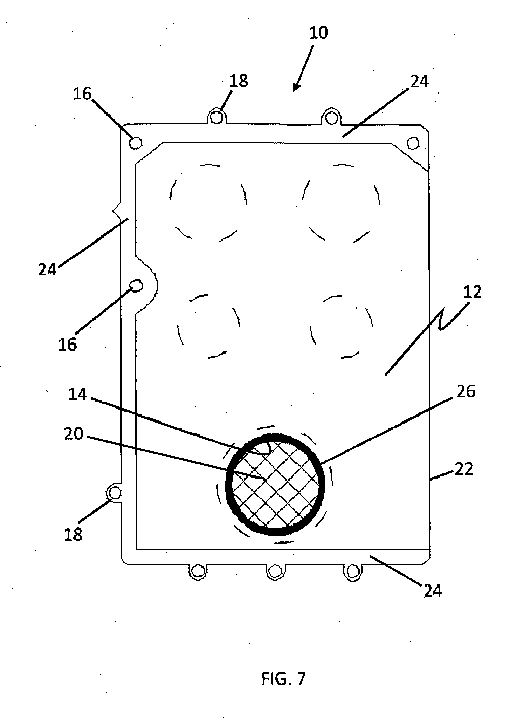

In den FIG. 6 und 7 kann eine Befestigungskomponente 26 für eine Luftbewegungseinrichtung (nicht dargestellt) an der Außenseite entsprechend FIG. 6, oder an der Innenseite entsprechend FIG. 7 der Außenfläche 12 befestigt werden.

Als ein optionaler sechster Schritt kann die endgültige Kontur des Plenumeinsatzes 10 durch Schneiden (zum Beispiel durch Laserschneiden, Stanzen oder ähnliches) entlang der versiegelten Kanten der Außenschicht 12 zugeschnitten werden. Beispielsweise kann die äußere Schicht 12 ge- bzw. beschnitten werden, um Fremdmaterial zu entfernen, ohne das innere Abstandsmaterial 20 zu schneiden, das vor dem Versiegeln innerhalb der äußeren Schicht zugeschnitten wird. Alternativ kann die innere Abstandshalterschicht 20 nicht vorgeschnitten werden, und die innere Abstandshalterschicht kann dann zusammen mit der äußeren Schicht 12 geschnitten werden, um Fremdmaterial in einem einzigen Schneidvorgang zu entfernen.

Dieses einzelne Zuschneiden kann auch der letzte Schritt bei der Herstellung des Plenumeinsatzes 10 sein. Alternativ können jedoch die äußere Schicht 12 und die innere Abstandsschicht 20 in ihre jeweiligen Formen vorgeschnitten werden, bevor die äußere Schicht über die Abstandsschicht gefaltet wird, wodurch der Schritt des endgültigen Schneidens nach dem Versiegeln der offenen Kanten des Plenumeinsatzes entfällt.

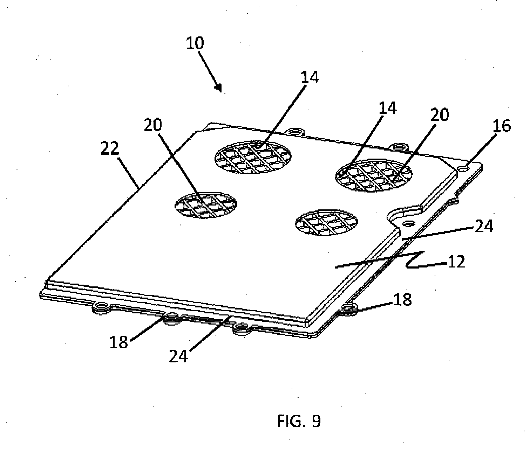

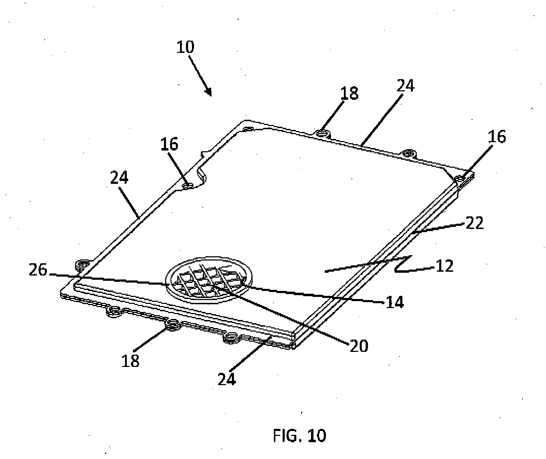

Die FIG. 9 und 10 zeigen eine fertige Ausführung des Plenumeinsatzes 10 zum Einbau in einen Fahrzeugsitz.

Es versteht sich, dass die Erfindung in ihrer Anwendung nicht auf die Einzelheiten der Konstruktion und der Anordnung der hier dargestellten Komponenten beschränkt ist. Die Erfindung ist auch in anderen Ausführungsformen möglich und kann auf verschiedene Weise durchgeführt oder ausgeführt werden, indem Merkmale einer Ausführungsform mit Merkmalen einer anderen Ausführungsform kombiniert werden. Variationen und Modifikationen des Vorgenannten fallen in den Anwendungsbereich der vorliegenden Erfindung. Es sollte auch verstanden werden, dass sich die hier offengelegte und definierte Erfindung auf alternative Kombinationen von zwei oder mehr der erwähnten oder aus dem Text und/oder den Zeichnungen ersichtlichen Einzelmerkmale erstreckt. Alle diese unterschiedlichen Kombinationen stellen verschiedene alternative Aspekte der vorliegenden Erfindung dar. Die hier beschriebenen Ausführungsformen erläutern die besten bekannten Ausführungsformen der Erfindung und ermöglichen es dem Fachmann, die Erfindung umzusetzen.

Zusammengefasst wird unter anderem ein Verfahren zur Herstellung eines Plenumeinsatzes für einen Fahrzeugsitz, umfassend die Schritte des Bereitstellens einer äußeren Materialschicht mit einer Kante, des Bereitstellens einer inneren Abstandshalterschicht, des Anbringens des Materials der inneren Abstandshalterschicht auf der äußeren Materialschicht, des Faltens der äußeren Materialschicht über die innere Abstandshalterschicht, so dass sich die Kante überlappt, und des Versiegelns der überlappenden Kante der äußeren Materialschicht, um die Abstandshalterschicht aufzunehmen, beschrieben.

## Patentansprüche

1. Verfahren zur Herstellung eines Plenumeinsatzes für einen Fahrzeugsitz, das die folgenden Schritte umfasst:
Bereitstellen einer äußeren Materialschicht aus einer undurchlässigen ein- oder mehrschichtigen Folie mit einer Kante,
Bereitstellen eines luftdurchlässigen inneren Abstandshalters,
Anbringen des Materials der inneren Abstandshalterschicht auf der äußeren Materialschicht,
Falten der äußeren Materialschicht über die innere Abstandshalterschicht, so dass sich der Rand überlappt, und
Versiegeln der überlappenden Kante der äußeren Materialschicht, um die Abstandshalterschicht aufzunehmen.

2. Verfahren nach Anspruch 1, **dadurch gekennzeichnet, dass** die äußere Materialschicht aus einer undurchlässigen Folie und einer Filzschicht besteht.

3. Verfahren nach Anspruch 1, **dadurch gekennzeichnet, dass** die äußere Materialschicht eine Polyurethanfolie umfasst.

4. Verfahren nach Anspruch 1, **dadurch gekennzeichnet, dass** die äußere Materialschicht eine Polyvinylchloridfolie umfasst.

5. Verfahren nach Anspruch 1, **dadurch gekennzeichnet, dass** die Abstandshalterschicht ein durchlässiges Gewebe oder ein durchlässiges Abstandsgewirke oder ein 3-D gedrucktes durchlässiges Abstandsgeflecht umfasst.

6. Verfahren nach Anspruch 1, **dadurch gekennzeichnet, dass** die äußere Materialschicht durch Verbinden mehrerer Materialschichten gebildet wird.

7. Verfahren nach Anspruch 6, **dadurch gekennzeichnet, dass** die miteinander verbundenen Mehrfachschichten Filz oder Vlies und einen Polyurethanfilmklebstoff umfassen.

8. Verfahren nach Anspruch 1, **dadurch gekennzeichnet, dass** weiterhin ein Schritt des Schneidens der inneren Abstandshalterschicht in eine Sitzkonfiguration vor den Schritten des Umfaltens und des Versiegelns und schließlich des Schneidens der äußeren Materialschicht vorgesehen ist.

9. Verfahren nach Anspruch 1, **dadurch gekennzeichnet, dass** weiterhin der Schritt des Schneidens des umgefalteten, versiegelten Einsatzes entlang des versiegelten Randabschnitts vorgesehen ist.

10. Verfahren nach Anspruch 1, **dadurch gekennzeichnet, dass** die Schritte des Schneidens der äußeren Materialschicht in eine gewünschte Form, des Schneidens der Abstandshalterschicht in eine gewünschte Form, des Faltens der geschnittenen äußeren Schicht über die geschnittene Abstandshalterschicht und des Versiegelns überlappender Randabschnitte der äußeren Materialschicht ohne einen weiteren letzten Schnitt nach dem Versiegeln durchgeführt werden.

11. Verfahren nach Anspruch 1, **dadurch gekennzeichnet, dass** das Falten der äußeren Materialschicht über die Abstandshalterschicht durch Falten der äußeren Materialschicht in der Hälfte erreicht wird.

12. Verfahren nach Anspruch 1, **dadurch gekennzeichnet, dass** das Falten der äußeren Materialschicht über die Abstandshalterschicht durch Falten des äußeren Materials entlang einer von der Mitte der äußeren Materialschicht versetzten Linie erfolgt.

13. Verfahren nach Anspruch 1, **dadurch gekennzeichnet, dass** die Oberfläche der äußeren Materialschicht mindestens doppelt so groß wie die Oberfläche der Abstandshalterschicht gewählt wird.

14. Verfahren nach Anspruch 1, **dadurch gekennzeichnet, dass** die Kantenversiegelung durch HF, Heißlaminierung oder durch ein Klebeband doppelseitig klebendes Klebeband erfolgt.

15. Plenumeinsatz für einen Fahrzeugsitz, hergestellt nach einem der Ansprüche 1 bis 14.
